# EUROPÄISCHE PATENTSCHRIFT

(11) **EP 2 870 356 B1**
(45) Veröffentlichungstag und Bekanntmachung des Hinweises auf die Patenterteilung: **06.03.2019**
(21) Anmeldenummer: 13736832.0
(22) Anmeldetag: 03.07.2013
(51) Int. Cl.: F03D 15/00, F03D 1/06, F03D 80/70

(54) **ANTRIEBSSTRANG FÜR EINE WINDKRAFTANLAGE**
DRIVE TRAIN FOR A WIND TURBINE
CHAÎNE CINÉMATIQUE POUR ÉOLIENNE

(30) Priorität: 04.07.2012 DE 102012013372
(43) Veröffentlichungstag der Anmeldung: 13.05.2015
(73) Patentinhaber: Fraunhofer-ges. zur Förderung der Angewandten Forschung E.V., 80686 München (DE)
(72) Erfinder: RUHLE, Andreas, 24223 Schwentinental (DE); MOLL, Hans-Georg, 29348 Eschede (DE); WENSKE, Jan, 21499 Radbruch (DE); PILAS, Martin, 28201 Bremen (DE)
(74) Vertreter: Pfenning, Meinig & Partner mbB
(86) Internationale Anmeldenummer: PCT/EP2013/063993
(87) Internationale Veröffentlichungsnummer: WO 2014/006074

(56) Entgegenhaltungen:
- WO-A1-2009/128723
- WO-A1-2010/130717
- WO-A1-2011/120720
- FR-A- 1 009 166
- US-A1- 2010 264 664

## Beschreibung

### Gebiet der Erfindung

Die Erfindung betrifft den in Kraftflussrichtung gesehen vorderen Teil des Antriebsstranges einer Windkraftanlage (WKA) und insbesondere den Bereich von der die Rotorblätter tragenden Nabe bis zur Eingangswelle und/oder Eingangsflansch einer nachgeschalteten mechanischen Anlagenkomponente wie beispielsweise eines nachgeschalteten Getriebes oder direktangetriebenen Generators.

Die Erfindung betrifft insbesondere die Bauweise eines Antriebsstranges für eine WKA, zur Ankopplung der Nabe einer WKA an die, der Nabe nachgeschalteten mechanischen Anlagenkomponenten, so dass in die nachgeschalteten Anlagenkomponenten (weitgehend) nur solche Kräfte bzw. Momente eingeleitet werden, die vollständig in elektrische Energie umgewandelt werden können bzw. (weitgehend) keine Kräfte bzw. Momente eingeleitet werden, die die nachgeschalteten Anlagenteile zusätzlich beanspruchen und dort insbesondere Verschleiß (von Lagern etc.) bzw. Ermüdung (von Bauteilen) hervorrufen können, aber keinen Beitrag zur Energiewandlung liefern.

Nachgeschaltete mechanische Anlagenkomponenten sind solche (aktiven) Komponenten im Antriebsstrang einer WKA, die zur Energieumwandlung und/oder -Erzeugung dienen, beispielsweise also die Eingangswelle eines Getriebes, das die langsam laufende Nabendrehzahl auf eine für einen Generatorbetrieb höhere Drehzahl übersetzt oder bei einem direkt angetriebenen Generator einer WKA die Eingangswelle bzw. der Eingangsflansch des direkt angetriebenen Generators.

Fortan wird ohne Einschränkung der Offenbarung für den Energiewandlungsvorgang mittels einer WKA der Begriff "Energieerzeugung" in dem Sinne verwendet, dass damit der Umwandlungsvorgang von mechanischer in elektrische Energie gemeint ist.

Zur Vermeidung der Einwirkung von Kräften und/oder Momenten auf den Antriebsstrang einer WKA, die nicht zur Energieerzeugung beitragen, wird eine Anordnung gemäß den Merkmalen des Anspruchs 1 vorgeschlagen.

Vorteilhafte Weiterbildungen einer solchen Anordnung sind Gegenstand der Merkmale in den abhängigen Unteransprüchen.

### Stand der Technik

Antriebsstränge für Windkraftanlagen sind z.B. aus den Druckschriften WO 2010/130717 A1, FR 1 009 166 A, WO 2011/120720 A1, US 2010/264664 A1 und WO 2009/128723 A1 bekannt.

Zur Bewältigung der starken Belastungen, die von den Rotorblättern über die Nabe einer WKA und von der Nabe selbst in die, in Kraftflussrichtung gesehenen, nachgeschalteten mechanischen Anlagenteile eingeleitet werden, werden nach dem bekannten Stand der Technik eine Vielzahl der mechanischen Bauteile und Komponenten in den nachgeschalteten mechanischen Anlagenteilen, insbesondere aber im Antriebsstrang einer WKA (beginnend mit der Nabe und endend mit der Generatorwelle) für erhöhte Belastungen ausgelegt, die bezogen auf die Anlagenbaugröße deutlich über die der Anlagennennleistung entsprechende Belastung hinausgehen, da auch Kraft- und Momenten- Komponenten aufgenommen werden müssen, die einerseits in den Antriebsstrang eingeleitet (und nicht - in Kraftflussrichtung gesehen - wie nach der Erfindung vorgesehen, möglichst weit vorne auf tragende Teile wie z. B. den Turm abgeführt werden) und die andererseits aber keinen Beitrag zur Energieerzeugung liefern.

Komponenten von Kräften und/oder Momenten, die - in Kraftflussrichtung gesehen - in nachgeschalteten mechanischen Anlagenkomponenten nicht zur Energieerzeugung beitragen sind vielmehr geeignet, solche Anlagenteile mit einer Beanspruchung zu beaufschlagen, die einerseits nicht an der Energieerzeugung direkt beteiligt sind und/oder die andererseits in diesen Anlagenteilen keinen unerwünschten Verschleiß erzeugen.

Die erhöhte Belastung kommt grundsätzlich dadurch zustande, dass die, die Rotorblätter antreibende, Windströmung nicht nur eine Kraftkomponente erzeugt, die genau tangential zur Nabenwelle wirkt, sondern dass sich (sowohl während einer Umdrehung der Nabe als auch über einen länger währenden Zeitraum) fortlaufend ändernde weitere Komponenten von Kräften und Momenten an den Rotorblättern und auf die Nabe wirken, die einerseits über die Flanschverbindung der Rotorblätter in die Nabe eingeleitet werden und die andererseits nicht zur Energieerzeugung beitragen. Zur Erzwingung eines Gleichgewichtszustandes (von Kräften und Momenten) müssen aber auch diese für den Betrieb einer WKA bzw. für die Energieerzeugung nutzlosen Komponenten von Kraft und Moment von der Konstruktion der WKA aufgenommen und schlussendlich in das Turmfundament abgeleitet werden.

Konkret bedeutet dies für den - gedanklichen - Fall, dass die Nabe fest mit der Eingangswelle eines nachgeschalteten Getriebes verbunden ist, dass die Eingangswelle (bzw. deren Lagerung, bzw. die Bauteile, die die Lagerung der Eingangswelle aufnehmen) die entsprechenden Gegenkräfte und Gegenmomente aufbringen müssen, um einen (statischen wie dynamischen) Gleichgewichtszustand bereitzustellen.

Bei diesem sehr vereinfachten Bild erkennt man deutlich, dass die durch die Windkräfte hervorgerufenen Beanspruchungen, nicht zu, auf die Eingangswelle genau tangential wirkenden Kraftkomponenten führen. Durch die Windkrafteinwirkung entstehen Verformungen der Anbauteile bzw. des Maschinenträgers, was dazu führt, dass sich die Beanspruchungen (wie bei einem vorhandenen kleinen Lagerspiel) - beispielsweise in das Getriebe- und/oder Generatorinnere fortsetzen und insbesondere auch unerwünschte Wirkungen an den ineinandergreifenden Zahnflanken erzeugen (z. B. Trockenlauf durch Verdrängung des schmierenden Ölfilms).

Im Schadensfall wäre in erheblichen Umfang das Getriebe betroffen, was eine sehr aufwändige Reparaturmaßnahme zur Folge hat, die je nach Anlagenbauform nur bei demontierter Gondel durchführbar ist.

Daher gibt es bei den im Stand der Technik realisierten Ausführungsformen von WKA eine Vielzahl konstruktiver Maßnahmen, die zum Ziel haben, unerwünschte weil z. B. Verschleiß erzeugende Kräfte und/oder Momente von den der Nabe (in Kraftflussrichtung gesehen) nachgeschalteten und zur Energiewandlung dienenden Anlagenteilen, möglichst fernzuhalten.

Beispiel hierfür ist die Lösung nach der WO 2011/120720 A1, von der Anmelderin "PURE TORQUE®" genannt, die eine als Hohlkörper ausgeführte Nabe aufweist, die einerseits radial angeordnete Flanschflächen zum Befestigen von (wenigstens zwei) Rotorblättern besitzt und die andererseits axial mittels zwei Lagern auf einem rohrförmigen Lagerkörper (ähnlich einer Achsschenkelkonstruktion bei Radaufhängungen eines älteren Kfz) am turmabgewandten (erstes Lager) und am turmnahen Ende (zweites Lager) des rohrförmigen Lagerkörpers gelagert ist.

Im Inneren des rohrförmigen Lagerkörpers ist eine relativ lange Antriebswelle vorgesehen, beginnend (z. B. an einer Flanschfläche) im Bereich des ersten Lagers, das an der turmabgewandten Seite der Nabe angeordnet ist und endend (an einer Kupplung) im Bereich der Eingangswelle eines nachgeschalteten Getriebes.
Der rohrförmige Lagerkörper bringt den Nachteil mit sich, ein relativ weit auskragendes Maschinenelement darzustellen, wobei im Endbereich der Auskragung die Nabe mit all ihren angreifenden Kräften und Momenten auf zwei abgesetzten Lagern angeordnet ist. Dieser rohrförmige Lagerkörper verformt sich unter den angreifenden Biegemomenten, sowohl statisch als auch dynamisch.

Der rohrförmige Lagerzapfen ist über einen seitlichen, großflächigen Flansch fest mit dem Turm verbunden. So soll erreicht werden, dass alle nicht in die relativ lange Antriebswelle eingeleiteten Kraft- und/oder Moment-Komponenten auf die Turmkonstruktion abgeleitet werden.

Damit kann mittels einer solchen Lagerkörperkonstruktion das Ziel der vorliegenden Erfindung, die Einleitung von unerwünschten Beanspruchungen in ein steifes, tragendes Konstruktionselement auf möglichst direktem und möglichst kurzem (d. h. mechanisch starrem) Wege zu bewerkstelligen, nicht erreicht werden, da die Kragarmanordnung mit der damit erforderlichen langen Antriebswelle ein schwingungsfähiges Gebilde mit schlanker Ausdehnung ist. Von dieser Konstruktionsform ist bekannt, dass im praktischen Betrieb u.a. unerwünschte Torsions-Schwingungen auftreten.

Das Getriebegehäuse des nachgeschalteten Getriebes kann nach der Lösung im Stand der Technik zudem beweglich in einem mit der Turmkonstruktion fest verbundenen Maschinenträger aufgehängt sein, so dass Relativbewegungen zwischen Nabe und Getriebeeingangswelle aufgenommen werden können.

### Wesen der Erfindung

Ausgehend von diesem Stand der Technik hat die Erfindung die Aufgabe eine Anordnung zu schaffen, die den Eintrag von Kraft- und/oder Momenten- Komponenten, die nicht bzw. nicht in wesentlichem Umfang in elektrische Energie gewandelt werden, in die der Nabe nachgeschalteten mechanischen Anlagenkomponente (n) einer WKA weitgehend unterbindet.
Dazu ist ein eine relativ große Befestigungsfläche aufspannendes Momentenlager (3) mit relativ großer innerer Öffnung vorgesehen, durch die eine nachgeschaltete mechanische Anlagenkomponente (2) zumindest teilweise (z. B. in Form eines Getriebeeingangsflansches (12)) in den Nabenhohlkörper (6) ragt,
wobei das eine Ende der Welle (1), die in einer besonders bevorzugten Ausführungsform der Erfindung als eine möglichst kurz bauende homokinetische Antriebswelle mit zwei an ihren Enden angebrachten homokinetischen Gelenken (4),(5) ausgeführt ist, über ein an seinem einen Ende befindlichen Gelenk (5) mit einer innerhalb des Nabenhohlkörpers (6) befindlichen ersten Befestigungsfläche (13) verbunden ist. Das zweite Ende der Welle ist über das dort befindliche zweite Gelenk (4) mit dem Getriebe,- oder Generatoreingangsflansch (12) einer nachgeschalteten mechanischen Anlagenkomponente verbunden.

Eine möglichst drehsteife, aber dennoch von unerwünschten Kräften bzw. Momenten befreite Einleitung des von der Windkraft erzeugten Nutz- Drehmomentes in den Wandler (2) wird erreicht, wenn die homokinetische Welle (1) möglichst kurz ausgeführt ist. Eine kurze Bauform ist u. a. vorteilhaft, um Drehschwingungen/Torsionsschwingungen im Antriebsstrang zu vermeiden.

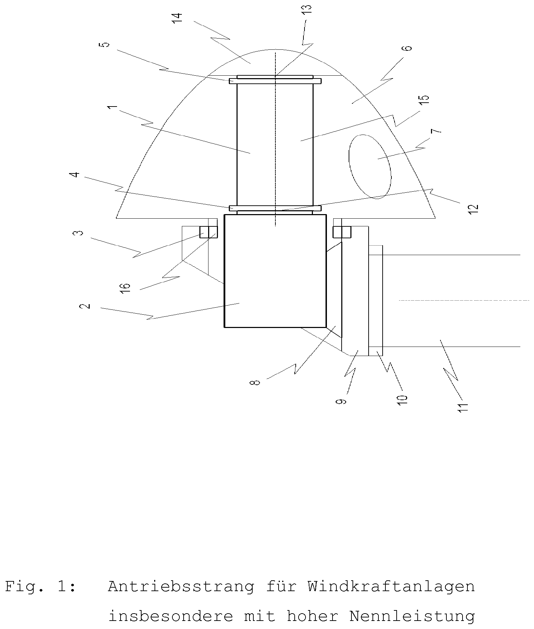

Im Fall einer Welle mit besonders kurzer Bauform ragt also, wie in Fig. 1 dargestellt, der Wandler (2) zumindest partiell in den Nabenhohlkörper (6), was zu einer sehr kompakten Bauform der WKA führt, da das Volumen des Nabenhohlkörpers mit als Bauraum zur Verfügung steht. Insgesamt entsteht eine kurze Maschine wobei auch der Maschinenrahmen eher nicht zu Drehschwingungen/ Torsionsschwingungen angeregt wird.

Das Momentenlager (3) ist mit seinem einen (feststehenden) Lagerteil an einem steifen, tragenden, ruhenden Konstruktionsteil der WKA befestigt. Mit seinem anderen (beweglichen) Lagerteil (16) ist die als Hohlköperkonstruktion ausgeführte Nabe (6) mit der dafür vorgesehenen Befestigungsstelle verbunden.

Durch die erfindungsgemäße Anordnung werden zwei Vorteile erreicht:
Erstens:
   alle nicht unmittelbar zur Energieerzeugung beitragenden Komponenten von Kräften und/oder Momenten (in Kraftflussrichtung gesehen) werden möglichst am Anfang, bevorzugt also über ein im Bereich der Nabe angeordnetes Momentenlager auf steife, tragende, ruhende Teile (wie z. B. den Maschinenträger (9), Turm (11)), abgeleitet und so die Verschleiß und Ermüdung verursachende Wirkung dieser Kraft- bzw. Momenten- Komponenten auf nachgeschaltete Anlagenkomponenten wie z. B. Getriebe- und/oder Generatorlager, Getriebeteile, und/oder Wellen, etc. dort vermieden und die negative Wirkung von nicht zur Energiewandlung beitragenden Komponenten von Kräften und/oder Momenten auf das Momentenlager beschränkt.
Zweitens:
   Durch eine mit zwei an ihren Enden befindlichen Gelenken ausgestattete Welle (1), bevorzugt als kurz bauende, homokinetische Antriebswelle ausgeführt, die direkt mit einer innerhalb des Nabenhohlkörpers (6) befindlichen Befestigungsstelle (13) verbunden ist, wird erreicht, dass über das andere Ende der Welle, das mit einem Eingangsflansch (12) einer nachgeschalteten Anlagenkomponente verbunden ist, ausschließlich ein Drehmoment übertragen wird, das frei ist von nicht für die Energieerzeugung nutzbaren Komponenten, und somit in den nachgeschalteten mechanischen Anlagenkomponenten keine unerwünschten Verformungen bzw. Beanspruchungen hervorruft.

Im Wartungs- bzw. Reparaturfall erfordert der Austausch des Momentenlagers zwar die Demontage der Nabe (und ggf. zuvor der Rotorblätter), was aber ungleich weniger aufwendig ist, als eine Demontage der gesamten Gondel (um z. B. einen Getriebe- bzw. Generatorschaden beheben zu können).

Zudem bestehen inzwischen umfangreiche Betriebserfahrungen zum Verhalten und insbesondere zur Lebensdauer von Momentenlagern, die belegen, dass diese über eine lange Missionszeit in der Lage sind, die beim Betrieb einer WKA anfallenden Belastungen aufzunehmen und insbesondere an tragende, statische Teile abzuführen. Zudem ist eine aus Sicherheits- und Verfügbarkeitsgründen gewünschte Überdimensionierung des Momentenlagers (im Vergleich zu anderen Maßnahmen der Überdimensionierung) deutlich preiswerter zu realisieren.

Dadurch, dass bei der erfindungsgemäßen Ausgestaltung des Antriebsstranges das Momentenlager relativ einfach ausgetauscht werden kann, besteht die Möglichkeit, eine entsprechend ausgestaltete WKA auch an größere Rotorblattlängen anzupassen (da mit größerer Blattlänge insbesondere auch größere Biegemomente einhergehen).

Anlagen nach dem Stand der Technik dagegen erfordern bei einer Vergrößerung der Rotorblattlänge meist umfangreiche Konstruktionsanpassungen, da die Rotorblattlänge erheblichen Einfluss auf den Antriebsstrang und insbesondere auf, aufgrund von erhöhten Kräften und Momenten, seine Verformungen hat.

Die Erfindung wird anhand eines bevorzugten Ausführungsbeispiels wie in der Fig.1 dargestellt, beschrieben.

An Rotorblättern von WKA entstehen über deren aerodynamischen Eigenschaften Kraftvektoren in mehreren Richtungen. Diese Kräfte sind teilweise in ein nutzbares Drehmoment umsetzbar, teilweise erzeugen sie nicht nutzbare Biegemomente und Axialkräfte - auch Schub genannt- welche in der WKA- Struktur aufgefangen werden müssen.
Mit zunehmender Nennleistung und/oder zunehmendem Rotordurchmesser der WKA steigen die o.g. Biegemomente und Axialkräfte deutlich an.

Die in Fig. 1 nicht dargestellten Rotorblätter haben an ihrem Ende (genannt Rotorblattwurzel) jeweils eine Flanschfläche. Über die entsprechende Gegen- Flanschfläche (7) sind die Rotorblätter an der Nabe (6) befestigt.
Die rotierende Nabe überträgt einerseits ein zur Energieerzeugung nutzbares Drehmoment und andererseits zur Energieerzeugung nicht nutzbare Biegemomente und Axialkräfte.

Die rotierende Nabe (6) ist bevorzugter Weise über den Innenring (16) des Momentenlagers (3) direkt mit dem nicht rotierenden Maschinenträger (9) drehbar verbunden.

Der Fachmann erkennt, dass auch eine Montage der Nabe am (dann beweglichen) Außenring des Momentenlagers die Realisierung des Erfindungsgedankens grundsätzlich ermöglicht.

Das Momentenlager (3) muss somit Biegemomente und Axialkräfte aufnehmen und über den Maschinenträger (9) sowie die Drehverbindung (10) an den Turm (11) weitergeben. Ein besonderer Vorteil der Anordnung nach der Erfindung liegt darin, dass diese Elemente sich unter Belastung verformen dürfen, ohne dass damit ein nachteiliger Einfluss auf das Getriebe bzw. auf einen direktgekuppelten Generator und insbesondere seines Luftspaltes verbunden ist. Der Maschinenträger (9) ist über eine Drehverbindung (10) mit dem Turm (11) der Windkraftanlage verbunden.

In der in Fig. 1 dargestellten Ausführungsform einer WKA ist das Momentenlager (3) zwischen der Mittelachse der Rotorblattwurzeln und der Mittelachse des Turms angeordnet.

Der Kraftfluss der Biegemomente und Axialkräfte (Schub) läuft von den Rotorblattwurzeln (7) (bzw. geometrisch präzise in der Mittelachse der Rotorblattwurzeln (7)) innerhalb der Nabe (6), die üblicherweise als Hohlkörperkonstruktion ausgeführt ist, in Richtung des Momentenlagers (3) - bzw. über dieses Momentenlager (3) in Richtung des Maschinenträgers (9) und von dort weiter in den Turm (11).

In einer möglichen Ausführungsform der Erfindung überträgt eine Welle (1) mit zwei Ausgleichsgelenken (4),(5), die Drehbewegung und das Drehmoment vom Nabenhohlkörper (6) auf den Eingangsflansch (12) der nachgeschalteten mechanischen Anlagenkomponente (2).

Besonders bevorzugt realisiert werden kann die Welle (1) in Form einer homokinetischen Antriebswelle mit je einem an ihrem Ende befindlichen homokinetischen Gelenk (4),(5). Damit werden Winkelgeschwindigkeiten und Drehmomente nahezu gleichmäßig übertragen und insbesondere Winkel-, Axial- und Radialversatz zwischen Antriebsseite
(z. B. in Form einer innerhalb der Hohlkörperkonstruktion der Nabe (6) auf deren turmabgewandten Seite,
   bei einer bevorzugten Ausführungsform an der Nabennase (14) angeordnete Flanschfläche(13))-
   und Abtriebsseite
(z. B. einem im Bereich des an turmzugewandter Stelle befindlichen homokinetischen Gelenks (4) bzw. einer am Wandler (2) eingangseitig befindlichen Flanschfläche) (12) ausgeglichen.

Unter einer homokinetischen Antriebswelle wird eine Welle verstanden, die an ihren Enden jeweils ein homokinetisches Gelenk - auch Gleichlaufgelenk genannt - aufweist, welches zudem allein und/oder mit dem zweiten Gelenk der Welle eine Verschiebefunktion zulässt.

Auch bei einer Winkelabweichung zwischen Eingangs- und Ausgangsgelenk der Welle übertragen die homokinetischen Gelenke Drehbewegung und Drehmoment weitestgehend gleichförmig.

Innerhalb der homokinetischen Antriebswelle sind Elemente verbaut welche einen "Axialversatz"/Verschiebung zulassen. Diese Verschiebefunktion kann in einem der homokinetischen Gelenke oder in beiden integriert sein oder durch ein separates Maschinenelement gewährleistet sein.

Durch den beidseitig möglichen Ausgleich von Winkelabweichungen und über die Verschiebefunktion / Axialversatz kann die komplette Einheit "homokinetische Antriebswelle" zudem einen Radialversatz zwischen der Antriebsseite und der Abtriebsseite ausgleichen - bei weitestgehend gleichförmiger Übertragung von Drehbewegung und Drehmoment.

Zusätzlich zu o.g. Funktion ist die homokinetische Welle (1) in einer bevorzugten Ausführungsform drehsteif zu wählen.

Unter drehsteif ist zu verstehen, dass die homokinetische Welle im Idealfall genau einen (Bewegungs-) Freiheitsgrad (und zwar das Drehmoment in axialer Richtung) möglichst gleichförmig und möglichst steif überträgt. Alle übrigen (Bewegungs-) Freiheitsgrade werden nicht oder möglichst wenig übertragen (in einem geringen Umfang unvermeidbar wegen Reibungseinflüssen u. ä.).

Im Zusammenhang mit dem Einsatz einer homokinetischen Welle im Rahmen der Erfindung bedeutet dies, dass sich die Lage der Rotationsachse der Nabe (6) bzw. der Nabennase (14) (innerhalb relativ weiter Grenzen) durch den Einfluss von äußeren Lasten aller Freiheitsgrade (die auf die tragende Konstruktion der WKA mechanisch verformend wirken) verändern kann, ohne dass die Eingangsseite (12) des Wandlers (2) mit anderen Beanspruchungen (außer also dem Bewegungs- Freiheitsgrad "Drehbewegung") beaufschlagt wird. Anders formuliert: durch die erfindungsgemäße Triebstranganordnung wird eine Isolierung der Nutzgröße "zur Energieerzeugung beitragende Drehbewegung" erreicht.

Beispiele für die Ausführung homokinetischer Gelenke:
Diese können gemäß dem Stand der Technik Kugel bzw. Kurvenbahnkonstruktionen sein, oder aber Gelenke welche mit mehreren "Lenkern" aufgebaut sind. Auch Stahllamellen o.ä. oder Kombination aus mehreren Bauformen sind denkbar.

Für eine Erreichbarkeit des Inneren des Nabenholkörpers (6) (im Servicefall) sind solche Konstruktionen besonders vorteilhaft, die, zumindest im Bereich der Befestigungsstelle (13) im Inneren des Nabenhohlkörpers (6), als Hohlkonstruktion realisierbar sind.

Eine homokinetische Welle (1) besteht demnach mindestens aus einem Wellenmittelstück (15) und den beidseitig an den Enden des Wellenmittelstücks angebrachten Gelenkeinheiten (4),(5).

Je nach Bauform der homokinetischen Welle (1) ist die Lage ihres Mittelteils (15) in axialer Richtung (bezogen auf die Achse des Antriebsstranges) "definiert" (im Sinne von fixiert) oder aber die Lage des Wellenmittelstücks (15) kann sich - innerhalb gewisser Grenzen - "frei" verändern.

Für die "freien" Wellen- Bauformen dagegen ist für das Wellenmittelstück (15) eine Fesselung dieses - dann nicht definierten - axialen Freiheitsgrades erforderlich (bildlich gesprochen, eine Vorrichtung welche das Wellenmittelstück (15) ungefähr in der Mitte hält).

Falls diese Gelenkeinheiten keinen Axialversatz zulassen, können zusätzliche Axial-Ausgleichselemente auf dem Wellenmittelstück (15) vorgesehen werden.

In einer bevorzugten Ausführungsform wird das Mittelstück der Welle (1) als Hohlwelle ausgebildet.

Um eine Zugangsmöglichkeit ins Innere des Nabenhohlkörpers (6) und zu den von dort erreichbaren Anlagenteilen zu schaffen, wird neben einer an der Befestigungsmöglichkeit (13) befindlichen Eintrittsöffnung ein in der Mantelfläche des Wellenmittelstücks (15) angeordnetes Mannloch vorgesehen.

Im Servicefall ist bei einer Reihe von WKA- Konstruktionen ein Ein,- bzw. Ausstieg aus der Gondel über eine Servicetür in das Innere der Nabe möglich.

Bei der erfindungsgemäßen Ausgestaltung der Welle(1) als Hohlwelle ist es vorteilhaft, wenn an der Nabennase (14) eine Serviceöffnung angebracht ist, durch die man - nach Durchqueren der Befestigungsstelle (13) im Inneren des Nabenhohlkörpers - ins Innere der Welle (1) und insbesondere des Wellenmittelstücks (15) gelangt. Über das bereits beschriebene in der Mantelfläche des Wellenmittelstücks (15) angeordnete Mannloch gelangt man schließlich ins Innere des Nabenhohlkörpers (6).

Alternativ kann auch die Welle des Wandlers (2) und dessen Befestigungsflansch (12) als Hohlwellenkonstruktion ausgebildet sein, so dass sich so ein Zugang zum Inneren des Nabenhohlkörpers (6) vom Inneren der Gondel realisieren lässt.

Damit ist eine Zugangsmöglichkeit von einer Öffnung in der Nabennase (14) zum Inneren der Hohlwelle und von dort über das radial angeordnete Mannloch zu den von dort aus im Nabenhohlkörper (6) erreichbaren Anlagenteilen (z. B. in Form von Schleifringen, Kabeln, etc.) geschaffen.

Das Drehmoment und die Drehzahl der Nabe (6) werden mittels eines Wandlers (2) in nutzbare Energie umgesetzt. Dieser Wandler (2) kann entsprechend dem Stand der Technik ein Generator oder eine Getriebe/Generator- Kombination (als Einheit oder in Einzelkomponenten aufgebaut) mit zusätzlichen Zwischenelementen/Maschinenelementen (wie z. B. einer Bremse) sein.

Der Wandler (2) besitzt eine Schnittstelle z. B. in Form einer wandlereingangsseitigen Flanschfläche (12), welche die mechanische Anbindung des Wandlers an die Abtriebsseite der homokinetischen Antriebswelle (1), als wesentliches Teil des rotierenden Antriebsstranges im Bereich des Gelenks (4) erlaubt.

Falls der Wandler (2) ein Getriebe darstellt bzw. beinhaltet wird von "langsamer" und "schneller" Welle gesprochen. Die schnelle Welle befindet sich bei diesem Sprachgebrauch auf der Generatorseite des Antriebsstranges, die langsame auf der Nabenseite. Falls der Wandler kein Getriebe beinhaltet, besitzt der Antriebsstrang nur eine langsame Welle.

Die Erfindung betrifft insbesondere einen Antriebsstrang für eine WKA, welcher mindestens aus folgenden Elementen besteht: eine Welle (1) mit zwei Ausgleichsgelenken (4),(5), besonders bevorzugt eine homokinetische Antriebswelle, die auf der langsamen Wellenseite montiert ist und auf einen nachgeschalteten Wandler (2) wirkt, mit einem Nabenhohlkörper (6), die über ein direkt an der Turmkonstruktion (z. B. über den Maschinenträger (9)) abgestütztes Momentenlager (3) drehbar gelagert ist.

Die Welle (1) endet, bei besonders kurzer Bauform der Welle (1) bereits vor der durch das Momentenlager aufgespannten Befestigungsfläche, so dass eine nachgeschaltete mechanische Anlagenkomponente wie z. B. der Wandler (2) durch diese aufgespannte Befestigungsfläche zumindest partiell in das Innere des Nabenhohlkörpers (6) ragt.

Das/die Außengehäuse des/der Wandler (2) sind über eine Gehäuselagerung (8) mit dem Maschinenträger (9) verbunden. Diese Gehäuselagerung (8) kann nach dem Stand der Technik starr oder elastisch erfolgen, über Drehmomentstützen, über Maschinenfüße oder über Flansche.

Bei bekannten Windkraftanlagen sind Nabe (6) (bzw. die Achse der Nabe) sowie der nachgeschaltete Antriebsstrang, bevorzugt bestehend u. a. aus einer homokinetischen Antriebswelle (1) gegenüber der Horizontalen geneigt zum Turm (11) angeordnet. Dies geschieht, um einen Sicherheitsabstand von den Rotorblattspitzen zum Turm zu erhalten.
Übliche Neigungswinkel sind 3 bis 8 Grad.

Die Ankopplung eines nachgeschalteten - erforderlichenfalls - über eine Gehäuselagerung (8) auf einem Maschinenträger (9) befestigten Wandlers (2) mittels einer erfindungsgemäßen Anordnung bringt eine Reihe von Vorteilen mit sich:
- unerwünschte Biegemomente und Kräfte einerseits bzw. das zur Energieerzeugung beitragende Drehmoment andererseits sind (wegen unvermeidbarer Lagerreibung weitgehend) voneinander entkoppelt.
- Das Innere der als Hohlkörperkonstruktion ausgebildeten Nabe (6) wird als Bauraum für einen Teil des Antriebsstranges genutzt. Damit kann die Gesamtanlage kompakter realisiert werden.
- Durch die Entkopplung wesentlicher Komponenten des Antriebsstranges können diese unabhängig voneinander definiert und konstruiert werden. Damit kann der Antriebsstrang einer WKA modularisiert werden.
- Durch eine Modularisierung entstehen definierte Schnittstellen zwischen den Einzelkomponenten, um diese zu einem Gesamtsystem zusammenfügen zu können.
   Dies führt mittelfristig zu einem Standardisierungseffekt und dadurch zu höheren Stückzahlen, höherer Qualität und sinkenden Preisen für Komponenten eines Antriebsstrangs einer WKA und damit für die gesamte WKA.
- Die Entkopplung von Lasten führt zu besser definierten Einzellasten und damit häufig zu einer leichteren Gesamtkonstruktion. Dadurch wird die Konstruktion von WKA mit hohen Nennleistungen erleichtert.
   Die größten Windkraftanlagen haben momentan eine Nennleistung von ca. 7 MW. Besonders für Windkraftanlagen mit einer Nennleistung im einstelligen oder zweistelligen MW Bereich wird die Entkopplung der Lasten vorteilhaft sein (also für onshore und offshore Windkraftanlagen) und somit die Entwicklung von zukünftigen, sehr leistungsstarken Windkraftanlagen erleichtern.
- Eine Modularisierung des Antriebsstranges ermöglicht, die Systeme des Antriebsstranges einzeln und besser testen zu können. Dadurch wird die Zuverlässigkeit der Gesamtanlage gesteigert.
- Die Entkopplung von Lasten führt zu einer einfacheren Simulation des Antriebsstranges und einer einfacheren messtechnischen Validierung der Simulation bei einer späteren Vermessung des realen Antriebsstranges. Dies bietet Potential für eine schnellere Lernkurve und damit schnelleren Produkteinführung bzw. kürzeren Entwicklungszeiten.
- Antriebsstrangkonzepte mit - in Kraftflussrichtung gesehen -weiter hinten liegenden, z. B. mit in den Wandler integriertem Hauptlager, führen zu problematischen Reparaturkonzepten. Bei diesen Anlagen kann das Getriebe nicht problemlos ausgewechselt werden (da meist integraler Bestandteil des Maschinenträgers).

Die der Erfindung zugrunde liegende Anordnung für einen Antriebsstrang erlaubt insbesondere die Demontage des Wandlers ohne die vorherige Demontage der Nabe trotz Verwendung eines Momentenlagers.

Naben (bzw. die geometrischen Rotationsachsen der Naben) von WKA sind in der Regel zwischen 3 und 8 Grad gegenüber der Horizontalen aufwärts geneigt und somit die Antriebsstränge (bzw. deren geometrische Achsen) dieser Anlagen fluchtend mit den Naben angeordnet.

Die erfindungsgemäße Anordnung erlaubt sowohl eine geneigte Bauform einer WKA, aber auch Bauformen mit axial nicht fluchtenden Anordnungen der Komponenten.

Als Beispiel für eine weitere Ausführungsform nach der Erfindung sei genannt:
Die Nabe (6) mit dem Momentenlager (3) sind um 3 bis 8 Grad gegenüber der Horizontalen (senkrecht zum Turm (11)) geneigt angeordnet, wobei der der Nabe (6) nachgeschaltete Wandler (2) aber waagerecht angeordnet ist. Der notwendige Winkelausgleich geschieht über die homokinetische Welle (1), insbesondere in deren homokinetischen Gelenken (4),(5).

Der Vorteil einer solchen Anordnung liegt in einer einfacheren Konstruktion der gesamten Anlage und insbesondere der Komponenten für den Antriebsstrang, da Störkräfte durch Schrägstellungen entfallen. Weiterhin ist die Wartung vereinfacht, da Antriebsstrangkomponenten nicht mehr geneigt eingebaut werden müssen. Zudem ist die Fertigung von präzisen senkrechten und waagerechten bzw. orthogonalen Flächen preiswerter möglich als die Fertigung geneigter Flächen.

### Bezugszeichenliste zu Fig. 1:

- 1: Wellenmittelstück,
bevorzugt Mittelstück einer homokinetischen Welle
- 2: Wandler (z. B. Getriebe)
als eine nachgeschaltete mechanische Anlagenkomponente
- 3: Momentenlager (mit Außen- und Innenring)
- 4: Gelenk, am turmseitigen Ende der Welle (1)
bevorzugt homokinetisches Gelenk
- 5: Gelenk, am turmabgewandten Ende der Welle (1)
bevorzugt homokinetisches Gelenk
- 6: Nabe, in Form eines Nabenhohlkörpers
- 7: Befestigungsstelle für ein Rotorblatt
- 8: Gehäuselagerung für Wandler (2)
- 9: Maschinenträger
- 10: Drehverbindung
- 11: Turm
- 12: abtriebsseitige Schnittstelle,
z. B. in Form einer Flanschverbindung an der Eingangsseite oder einer anderen möglichen Welle-Nabe-Verbindung des Wandlers (2)
- 13: antriebsseitige Schnittstelle,
z. B. in Form einer Flanschverbindung im Inneren des Nabenhohlkörpers oder einer anderen möglichen Welle-Nabe-Verbindung (6)
- 14: Nabennase
- 15: Wellenmittelstück
- 16: Innenring des Momentenlagers (3)

## Patentansprüche

1. Antriebsstrang für eine Windkraftanlage bestehend aus einer Welle (1), einem Momentenlager (3), einem Wandler (2) und einer als Hohlkörper ausgeführten Nabenkonstruktion (6),
die eine in der Rotationsachse innerhalb der Nabenkonstruktion (6) auf der turmabgewandten Seite liegende Befestigungsmöglichkeit (13) für ein nachgeschaltetes Element des Antriebsstranges aufweist,
wobei die als Hohlkörper ausgeführte Nabenkonstruktion (6) auf der turmzugewandten Seite mit einem der beiden Lagerteile (16) des Momentenlagers (3) drehbar verbunden ist,
das andere, zweite Lagerteil des Momentenlagers (3) fest mit einem tragenden, statisch ruhenden Maschinenträger (9) verbindbar ist,
mit der innerhalb der Nabenkonstruktion (6) befindlichen Befestigungsmöglichkeit (13) die Welle (1) verbunden ist, die an den Enden des Wellenmittelstücks (15) je ein Gelenk (4), (5) aufweist, wobei die Welle (1) über das erste Gelenk (5) mit der innerhalb der Nabenkonstruktion (6) befindlichen Befestigungsmöglichkeit (13) verbunden ist,
wobei das auf der turmzugewandten Seite liegende Ende der Welle (1) über das dortige Gelenk (4) an eine eingangsseitige Flanschfläche (12) des Wandlers (2) angeschlossen ist,
wobei mit den Gelenken (4), (5) der Ausgleich radialer und/oder axialer und/oder Winkelversätze sichergestellt ist,
wobei eine nachgeschaltete mechanische Anlagenkomponente (2) durch die von dem Momentenlager (3) aufgespannte Befestigungsebene zumindest teilweise in den Nabenhohlkörper (6) ragt, wobei die nachgeschaltete mechanische Anlagenkomponente der Wandler (2) ist.

2. Antriebsstrang nach Anspruch 1, **dadurch gekennzeichnet, dass** die Welle (1) eine homokinetische Welle ist, die an ihren Enden jeweils ein homokinetisches Gelenk (4, 5) aufweist, welches zudem allein und/oder mit dem zweiten Gelenk der Welle (1) eine Verschiebefunktion zulässt.

3. Antriebsstrang nach Anspruch 1 bis 2 **dadurch gekennzeichnet, dass** sich das Wellenmittelstück (15) axial in einer weitgehend ortsfesten Position befindet.

4. Antriebsstrang nach einem der Ansprüche 1 bis 3 **dadurch gekennzeichnet, dass** das Wellenmittelstück 15 als Hohlköper mit wenigstens einem Mannloch ausgestattet ist.

5. Antriebsstrang nach einem der Ansprüche 1 bis 4 **dadurch gekennzeichnet, dass** die Nabenkonstruktion (6) im Bereich der Befestigungsmöglichkeit (13) ein von außen zugängliches Mannloch aufweist.

6. Antriebsstrang nach einem der Ansprüche 1 bis 5 **dadurch gekennzeichnet, dass** die Rotationsachse des Wandlers (2) gegenüber der Horizontalen einen anderen Neigungswinkel aufweist als die Rotationsachse der Nabenkonstruktion (6).

7. Antriebsstrang nach einem der Ansprüche 1 bis 6 **dadurch gekennzeichnet, dass** das an der turmzugewandten Seite befindliche Gelenk (4) der Antriebswelle (1) zumindest teilweise innerhalb des Nabenhohlkörpers angeordnet ist.

8. Antriebsstrang nach einem der Ansprüche 1 bis 7, weiter umfassend den genannten Maschinenträger (9), wobei der Wandler (2) über eine Gehäuselagerung (8) mit dem Maschinenträger (9) verbunden ist, wobei die Verbindung sowohl starr als auch elastisch ausgeführt werden kann.

## Claims

1. A drive train for a wind turbine, comprising a shaft (1), a slew bearing (3), a converter (2) and a hub system (6) designed as a hollow body comprising a fastening option (13), which is located in the axis of rotation inside the hub system (6) on the side facing away from the tower, for a downstream element of the drive train,
wherein the hub system (6) designed as a hollow body on the side facing the tower can be rotatably connected to one of the two bearing parts (16) of the slew bearing (3), the other, second bearing part of the slew bearing (3) can be fixedly connected to a supporting, static machine frame (9), and the shaft (1), which at each of the ends of the shaft center piece (15) comprises a joint (4), (5), is connected to the fastening option (13) located inside the hub system (6), the shaft (1) being connected via the first joint (5) to the fastening option (13) located inside the hub system (6),
the end of the shaft (1) located on the side facing the tower being connected by way of the joint (4) present there to an input-side flange surface (12) of the converter (2),
the joints (4), (5) ensuring the compensation of radial and/or axial and/or angular offsets,
a downstream mechanical equipment component (2) protruding at least partially through the fastening plane spanned by the slew bearing (3) into the hub hollow body (6), the downstream mechanical equipment component being the converter (2).

2. The drive train according to claim 1, **characterized in that** the shaft (1) is a homokinetic shaft, which at the respective ends thereof comprises a homokinetic joint (4, 5), which additionally allows a displacement function by itself and/or together with the second joint of the shaft (1).

3. The drive train according to claims 1 to 2, **characterized in that** the shaft center piece (15) is axially located in a substantially stationary position.

4. The drive train according to any one of claims 1 to 3, **characterized in that** the shaft center piece (15) is designed as a hollow body including at least one manhole.

5. The drive train according to any one of claims 1 to 4, **characterized in that** the hub system (6) includes a manhole accessible from the outside in the region of the fastening option (13).

6. The drive train according to any one of claims 1 to 5, **characterized in that** the axis of rotation of the converter (2) has a different angle of inclination with respect to the horizontal than the axis of rotation of the hub system (6).

7. The drive train according to any one of claims 1 to 6, **characterized in that** the joint (4) of the drive shaft (1) located on the side facing the tower is at least partially arranged inside the hub hollow body.

8. The drive train according to any one of claims 1 to 7, furthermore comprising the aforementioned machine frame (9), the converter (2) being connected via a housing bearing (8) to the machine frame (9), wherein the connection can be designed to be rigid as well as elastic.

## Revendications

1. Chaîne cinématique pour une éolienne, composée d'un arbre (1), d'un palier rigide aux moments (3), d'un convertisseur (2) et d'une construction de moyeu (6) réalisée en tant que corps creux qui comporte, pour un élément de la chaîne cinématique monté en aval, une possibilité de fixation (13) située dans l'axe de rotation à l'intérieur de la construction de moyeu (6) sur le côté opposé au mât,
la construction de moyeu (6) réalisée en tant que corps creux étant, sur le côté tourné vers le mât, raccordée en rotation à l'une des deux parties de palier (16) du palier rigide aux moments (3),
l'autre deuxième partie de palier du palier rigide aux moments (3) pouvant être raccordée de façon fixe à un support de machine (9) porteur reposant de façon statique,
l'arbre (1) étant raccordé à la possibilité de fixation (13) située à l'intérieur de la construction de moyeu (6), et comportant respectivement une articulation (4), (5) aux extrémités de la pièce centrale d'arbre (15), l'arbre (1) étant, par le biais de la première articulation (5), raccordé à la possibilité de fixation (13) située à l'intérieur de la construction de moyeu (6),
l'extrémité de l'arbre (1) située sur le côté tourné vers le mât étant reliée par le biais de l'articulation (4) de cet endroit à une surface de bride (12) du convertisseur (2) côté entrée,
la compensation de décalages radiaux et/ou axiaux et/ou angulaires étant assurée avec les articulations (4), (5),
un composant d'installation (2) mécanique monté en aval dépassant au moins partiellement dans le corps creux de moyeu (6) à travers le plan de fixation défini par le palier rigide aux moments (3), le composant d'installation (2) mécanique monté en aval étant le convertisseur (2).

2. Chaîne cinématique selon la revendication 1, **caractérisée en ce que** l'arbre (1) est un arbre homocinétique qui comporte à ses extrémités respectivement une articulation (4,5) homocinétique et qui permet en outre, seul et/ou avec la deuxième articulation de l'arbre (1), une fonction de déplacement.

3. Chaîne cinématique selon les revendications 1 à 2, **caractérisée en ce que** la pièce centrale d'arbre (15) se trouve axialement dans une position largement stationnaire.

4. Chaîne cinématique selon l'une des revendications 1 à 3, **caractérisée en ce que** la pièce centrale d'arbre (15) en tant que corps creux est équipée d'au moins un trou d'homme.

5. Chaîne cinématique selon l'une des revendications 1 à 4, **caractérisée en ce que**, dans la zone de la possibilité de fixation (13), la construction de moyeu (6) comporte un trou d'homme accessible de l'extérieur.

6. Chaîne cinématique selon l'une des revendications 1 à 5, **caractérisée en ce que** l'axe de rotation du convertisseur (2) présente, par rapport à l'horizontale, un autre angle d'inclinaison que l'axe de rotation de la construction de moyeu (6).

7. Chaîne cinématique selon l'une des revendications 1 à 6, **caractérisée en ce que** l'articulation (4) de l'arbre d'entraînement (1) située sur le côté tourné vers le mât est disposée au moins partiellement à l'intérieur du corps creux de moyeu.

8. Chaîne cinématique selon l'une des revendications 1 à 7, comprenant également ledit support de machine (9), le convertisseur (2) étant raccordé au support de machine (9) par le biais d'un support de carter (8),
le raccordement pouvant être réalisé aussi bien de façon rigide que de façon élastique.
